# EUROPÄISCHE PATENTSCHRIFT

(11) **EP 3 408 040 B1**
(45) Veröffentlichungstag und Bekanntmachung des Hinweises auf die Patenterteilung: **05.02.2020**
(21) Anmeldenummer: 16829231.6
(22) Anmeldetag: 12.12.2016
(51) Int. Cl.: B21B 25/00

(54) **VERFAHREN ZUR HERSTELLUNG EINES WARMUMFORMWERKZEUGES**
METHOD FOR PRODUCING A HOT-FORMING TOOL
PROCÉDÉ DE FABRICATION D'UN OUTIL DE FORMAGE À CHAUD

(30) Priorität: 30.12.2015 DE 102015122975
(43) Veröffentlichungstag der Anmeldung: 05.12.2018
(73) Patentinhaber: Dörr, Wolfgang, 66450 Bexbach (DE)
(72) Erfinder: Dörr, Wolfgang, 66450 Bexbach (DE)
(74) Vertreter: Limbeck, Achim
(86) Internationale Anmeldenummer: PCT/DE2016/100578
(87) Internationale Veröffentlichungsnummer: WO 2017/114523

(56) Entgegenhaltungen:
- DE-A1-102011 010 646
- JP-A- S63 192 504
- US-A- 1 951 087

## Beschreibung

### Technisches Gebiet

Die vorliegende Erfindung betrifft ein Verfahren zur Herstellung eines Warmumformwerkzeuges, insbesondere eines Lochdornes, eines Schmiededornes oder einer Walzstange im Bereich der Herstellung von nahtlosen Rohren (nachstehend auch als Werkzeuge bezeichnet) nach dem Obersatz des Patentanspruchs 1.

### Stand der Technik

Bei der Herstellung der nahtlosen Stahlrohre wird nach Mannesmannverfahren zuerst ein voller Stahlblock mit einer Temperatur um 1200°C in einem Schrägwalzwerk durch Walzen über einem Lochdorn zu einem Hohlblock geformt. Hinter dem Schrägwalzwerk werden solche Hohlblöcke in mehrstufigen Umformprozessen weiter verarbeitet.

Bei diesen Walzprozessen werden die Innenwerkzeuge hohen thermischen und mechanischen Belastungen ausgesetzt. Um die Standzeit der Warmumformwerkzeuge zu erhöhen und die Qualität der Produkte zu gewährleisten, werden z.B. die Oberfläche der Lochdorne vor dem Einsatz oxidiert bzw. verzundert.

In der EP1632583A1 wird eine Erzeugung einer Oxidschicht bis zu einer Dicke von 1,5 mm empfohlen. Diese Oxidschicht schält jedoch im Einsatz entweder schnell ab oder wird durch mechanischen Verschleiß reduziert. Beide Vorgänge führen zu einem schnellen Versagen des Werkzeuges und im schlimmsten Fall zu einer Qualitätsminderung der Produkte bis zu einem Produktausschuss und Produktionsausfall (siehe Pehle und Serin in "Stahl und Eisen" 134 (2014) Nr. 11).

In der WO2011/107214A1 wird eine Vorprofilierung der Werkzeugoberfläche als eine geeignete Maßnahme zum Verhindern des Abschälens empfohlen. Diese Vorprofilierung soll durch eine Materialabtragung auf der Oberfläche des Werkzeuges bevorzugt durch Drehen erzielt werden. Bekanntlich setzt sich die durch das Drehen erreichbare, maximale Abtragungstiefe des Materials, welche in der Druckschrift empfohlen wird, aus einem Verhältnis der Tiefe der Abtragung und Breite des Drehwerkzeuges (z. B. Stechmeißel) zusammen. So können nach dem in der WO2011/107214A1 beschriebenen Verfahren keine tieferen Abtragungen z.B. mit einer Breite von 0,5 mm erreicht werden.

In der Veröffentlichung Pehle und Serin (in "Stahl und Eisen" 134 (2014) Nr. 11) wird eine sehr dicke Isolierschicht empfohlen. Nach den bisher bekannten Verfahren ist jedoch die Tiefe der erreichbaren Abtragungen durch Drehverfahren und damit die Dicke der maximalen Isolierschicht begrenzt. Um den thermischen und mechanischen Belastungen auf dem Werkzeug im Einsatz begegnen zu können, werden auch sehr kostenintensive Werkzeuge, z.B. Lochdorne aus Molybdän hergestellt, oder wie im Beispiel der Druckschrift US1963320A, Grundkörper mit einer reliefierten Oberfläche mit Molybdän überzogen. Diese bekannten Verfahren haben jedoch bisher keine zufrieden stellende Lösung hervorgebracht.

In der US 5 031 434 A ist ein Stopfen zur Herstellung eines nahtlosen Stahlrohres offenbart, der eine mit Nuten oder konvexen Rillen versehene, unebene Oberflächenschicht aus Molybdän- oder Molybdän-Basis-Legierung aufweist.

Aus der DE 10 2014 000 461 A1 ist ferner ein Innenwerkzeug für die Herstellung nahtloser Stahlrohe bekannt, das zur Erhöhung seiner Standzeit mit einer keramischen Schutzschicht versehen ist, die Oberglächenerhebungen und -vertiefungen enthält.

In der DE 10 2011 010 646 A1, welche als nächstliegender Stand der Technik angesehen wird, wird ein Verfahren zur Herstellung eines Warmumformwerkzeuges beschrieben, welcher mindestens einen metallischen Grundkörper umfasst. Hierbei wird eine Vorprofilierung der Werkzeugoberfläche vorgenommen, um ein Abschäeln der Beschichtung zu verhindern. Dabei weist die radial außenliegende Oberfläche des Werkzeuh-Grundkörpers eine Oberflächen-Profilierung auf, die aus einer Anzahl von radial vorstehenden Erhebungen besteht, die zwischen sich somit ergebenden Vertiefungen angeordnet sind, wobei diese anschließend mittels Plasmaspritzen aufgefüllt werden. Gemäß der DE 10 2011 010 646 A1 muss somit der Grundkörper materialabtragend bearbeitet werden, um die Lücken zu erzeugen, welche anschließend mittels Plasmaspritzens wieder verengt bzw. verschlossen werden.

In der US 1 951 087 A wird ebenfalls Warmumformwerkzeuges beschrieben, welcher mindestens einen metallischen Grundkörper mit unterschiedlichen Scheibenringen umfasst. Diese Scheibenringe werden jedoch nicht mit dazwischen liegenden Lücken angeordnet, und es erfolgt auch keine Verbindung mittels Plasmaspritzen. Die einzelnen Ringe sind vielmehr drehbar auf dem Dorn gelagert.

Die JP S63 192 504 A offenbart das konventionelle Beschichten eines Walzdorn mittels Plasmaspritzen.

### Darstellung der Erfindung

Der vorliegenden Erfindung liegt die Aufgabe zu Grunde, ein Verfahren zum Herstellen eines Warmumformwerkzeuges zu schaffen, mit dem im Einsatz eine thermische Isolierung maximiert und die Verschleißrate der Werkzeuge minimiert werden.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Verfahrens sind in den abhängigen Unteransprüchen angegeben.

Es wird vorangestellt, dass das Formwerkzeug gemäß dem Stand der Technik mindestens einen metallischen Grundkörper umfasst.

Erfindungsgemäß ist ein Verfahren der eingangs genannten Art dadurch gekennzeichnet, dass der Grundkörper zumindest anteilig mit an dem Grundkörper beabstandet angeordneten, metallischen Scheibenringen oder Scheiben derart bestückt wird, dass beim Aufbringen der metallischen Scheibenringe oder Scheiben eine Lücke zwischen den Scheibenringen oder Scheiben entsteht, wobei der Abstand der Lücken vorzugsweise zwischen 0,1 mm bis 10 mm liegt, jedoch besonders bevorzugt 1 mm beträgt.

Erfindungsgemäß wird eine Verstärkung der Verbindung der Scheiben mit dem Grundkörper durch mechanische Verklammerung, Bindemitteln, durch Schweißen vor allem durch elektrisches Widerstandsschweißen oder durch atomare Diffusionsvorgänge während des thermochemischem Verfahrens realisiert.

Es ist besonders vorteilhaft vorgesehen, die Oberflächen der Scheibenringe oder Scheiben und/oder vorzugsweise vorgesehene und in die Lücken eingebrachte Zusatzmaterialien (bspw. keramische Partikel, Eisengusspartikel oder Drähte) mittels eines thermochemischen Verfahren zur Oxidation zu bringen, wobei die Lücken durch die Bildung der metallischen Oxide bzw. des Zunders verengt oder vollständig verschlossen werden.

Darüber hinaus kann es auch vorteilhaft sein, in die verengten Lücken derartige Zusatzmaterialien einzubringen. Das Verschließen der Lücken oder der verengten Lücken erfolgt in dieser Ausführungsform bspw. mittels thermischem Plasmaspritzen.

Die metallischen Scheibenringe oder Scheiben (im Nachstehenden auch als Scheiben benannt) erzeugen durch anteiliges oder ganzes Aufbringen dieser auf dem Grundkörper eine alternierende Oberfläche mit vollen und leeren Bereichen, ohne dass eine alternierende Abtragung des Grundkörper nötig ist.

Durch dieses Vorgehen können die chemische Zusammensetzung und das Herstellungsverfahren des Grundkörpers und der Scheiben unterschiedlich sein. Bei den von innen gekühlten Warmumformwerkzeugen ist es vorteilhaft, wenn der metallische Grundkörper eine höhere thermische Leitfähigkeit gegenüber dem Scheibenmaterial besitzt. Bei den schwer walzbaren Produkten sollten jedoch Scheiben mit höheren Warmfestigkeiten und Verschleißraten eingesetzt werden.

Der Grundkörper des Werkzeuges besteht erfindungsgemäß aus einem Metall. Zum Aufbringen der Scheiben auf dem Grundkörper kann der Grundkörper je nach der Geometrie des Warmumformwerkzeuges auf einem konstanten Maß oder auf unterschiedlichen Maßen bearbeitet werden. Speziell bei den Warmumformwerkzeugen mit Innenkühlung sollte die thermische Leitfähigkeit des Grundkörpers bevorzugt gleich oder höher als die thermische Leitfähigkeit der Scheiben sein.

Die Scheiben bestehen bevorzugt aus Stählen, wobei die Scheiben direkt aus Blechen ausgebrannt, gestanzt oder aus vollen Blöcken zum Beispiel durch Drehen herausgearbeitet werden können. Die Scheiben bestehen bevorzugt aus Stählen, dessen mechanische Verschleißrate bevorzugt gleich oder geringer als die Verschleißrate des Grundkörpers sein sollte. Zur weiteren Stärkung der Bindung zwischen den Scheiben und der Füllung können die Scheiben auch mit Ausschnitten, Löchern und/oder mit einer rauhen Oberfläche vorbearbeitet werden.

Weiterhin ist es vorteilhaft, wenn Scheiben zumindest teilweise mit unterschiedlichen chemischen Zusammensetzungen verwendet werden. Dies führt vor allem dazu, dass die Scheiben je nach ihrer chemischen Zusammensetzung während des thermo-chemischen Behandlungsprozesses und während des Einsatzes der Werkzeuge unterschiedlich oxidieren und im Einsatz unterschiedlich verschleißen. So können dann erfindungsgemäß, je nach Einsatz des Werkzeuges, auf dem Grundkörper mehrere Scheibensorten mit unterschiedlichen chemischen Zusammensetzungen aufgebracht werden.

Indem die thermische Belastung auf dem Grundkörper und die Verschleißgeschwindigkeit der Oberfläche minimiert werden, kann die Standzeit nach diesem Vorgehen gefertigter Warmumformwerkzeuge erhöht werden.

In der Druckschrift WO2011/107214A1 wird ein Warmumformwerkzeug mit Oberflächenprofilierung beschrieben. Weiterhin ist bekannt, dass die Oberflächen der Lochdorne vor dem Oxidierungsprozess durch Strahlen aufgeraut werden. In beiden Fällen wird dadurch eine verbesserte Verklammerung der Oxidschicht und Erhöhung der Oxidschicht auf dem Grundkörper beabsichtigt. Jedoch werden in beiden Fällen die Oberflächen der Lochdorne durch Entfernung des Grundkörpermaterials vorprofiliert, somit bestehen das Profil und der Grundkörper im Gegensatz zu der vorliegenden Erfindung aus einer Einheit bzw. müssen die gleichen chemischen Zusammensetzungen aufweisen, womit eine Variierung der chemischen Zusammensetzung des Grundkörpers und des Profilmaterials nicht möglich ist. Ohne eine Möglichkeit der Variierung des Trägermaterials und des Profilmaterials aus unterschiedlichen Werkstoffen kann die Standzeit der Werkzeuge nicht deutlich erhöht werden. Bisher sind die Tiefe bzw. Höhe des Profils abhängig vom der Machbarkeit der mechanischen Fertigung, wovon die vorliegende Erfindung unabhängig ist.

Nach der vorliegenden Erfindung kann die Gesamttiefe der Isolierung zwischen den Scheibenresten bis maximal 90 % des lokalen Durchmessers des Werkzeuges betragen.

Durch die vorliegende Erfindung werden die Werkzeugkosten bei der Erzeugung von metallischen Produkten verringert, die Standzeit der Werkzeuge verlängert, der Ausschussgrad in der Produktion minimiert und die Energiekosten (wie z.B. welche zum Kühlen der in der Regel überhitzten Werkzeuge) reduziert. Somit kann der Hersteller der metallischen Produkte durch Einsetzen der nach der vorliegenden Erfindung hergestellten Warmumformwerkzeuge seine Kosten in diesen Bereichen minimieren. Weiterhin wird der in der Lage sein schwer walzbare Produkte herzustellen und die Produktionsmengen bei gleich bleibenden Produktionszeiten zu erhöhen.

In einer weiteren Ausführungsform der Erfindung können die Verbindungen zwischen dem Füllmaterial der Zwischenräume, Scheiben und dem Grundkörper durch Bindemittel oder bevorzugt durch elektrisches Widerstandsschweißen verstärkt werden.

Der Werkstoffauswahl und die Gestaltung des Grundkörpers, der Scheiben, des Füllmaterials werden je nach Einsatzbedingungen des Warmumformwerkzeuges mit dem Ziel die höchstbeste Leistung des Warmumformwerkzeuges zu gewährleisten, die Produktionsqualität zu steigern und die Kosten zu minimieren kombiniert.

Eine weitere Einsatzoptimierung der gemäß dem hier beschriebenen Verfahren gefertigten Werkzeuge kann erzielt werden, wenn diese zusätzlich mit einer Randschichthärtung z.B. Nitrieren versehen und/oder noch die Oberflächen der Werkzeuge vor dem Einsatz durch Drehen und/oder Schleifen geglättet und/oder noch durch eine zusätzliche Schicht, z.B. durch eine Verchromung überzogen werden.

Das beschriebene Vorgehen eignet sich auch generell für die Fertigung der Werkzeuge und Bauteile, wo eine thermische Isolierung gewünscht ist und oder eine verringerte mechanischer Verschleiß erzielt werden soll.

### Kurzbeschreibung der Zeichnungen

Weitere Ziele, Merkmale, Vorteile und Anwendungsmöglichkeiten des erfindungsgemäßen Verfahrens ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen
Fig.1 ein Warmumformwerkzeug in Form eines herkömmlichen Lochdornes in der Seitenansicht;
Fig.2 ein Ausführungsbeispiel der vorliegenden Erfindung;
Fig.3 einen Teil des Werkzeuges nach dem Oxidieren durch ein thermo-chemisches Verfahren.

### Ausführung der Erfindung

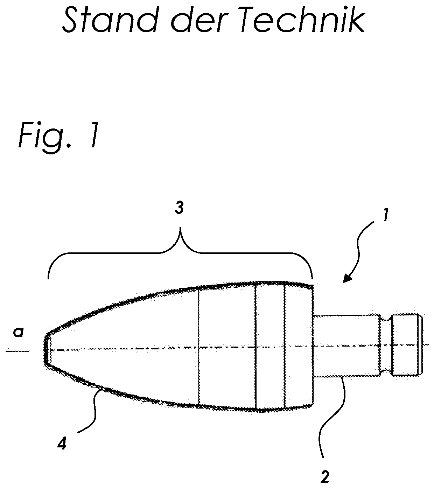

Fig.1 zeigt ein Warmumformwerkzeug 1 in Form eines herkömmlichen nach dem Stand der Technik bekannten Lochdornes 1 in einer Seitenansicht. Das Werkzeug 1 umfasst einen Grundkörper 2, der einen Arbeitsbereich 3 aufweist, der sich in gewisser Länge in Richtung einer Achse a erstreckt. Im Arbeitsbereich 3 wird das Werkzeug 1 mit einer Oxidschicht 4 versehen, die das Werkzeug 1 vor thermischer und/oder mechanischer Belastung schützen soll.

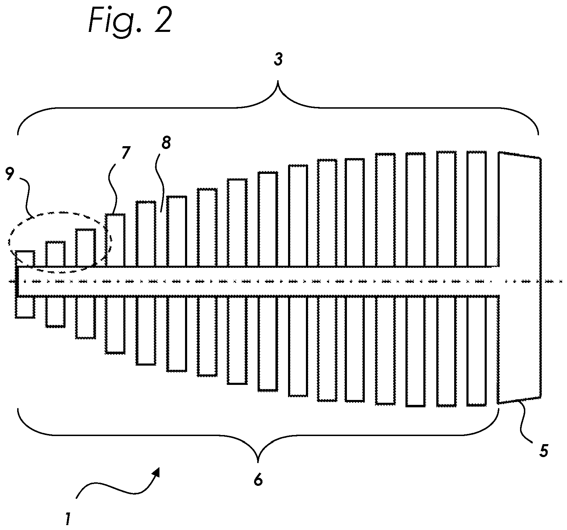

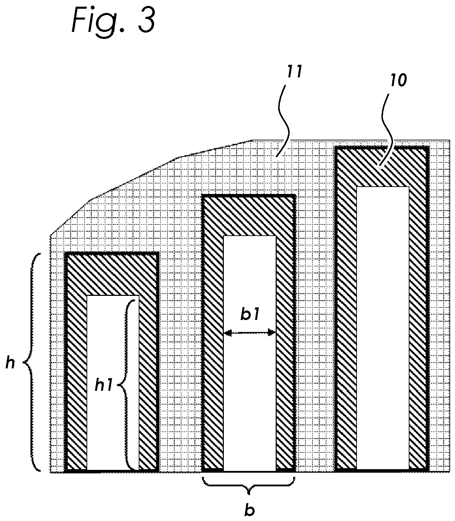

Fig.2 zeigt ein Ausführungsbeispiel der vorliegenden Erfindung, in der der Grundkörper 5 vorbereitet ist und der größte Teil 6 des Arbeitsbereichs 3 mit Scheibenringe 7 so bestückt ist, so dass zwischen Scheibenringen 7 die Lücken 8 zu sehen sind. Der Zustand nach dem Oxidieren und Füllen der Lücken 8 wird im Einzelschnitt 9 in Fig.3 dargestellt.

Fig.3 zeigt insofern den Einzelschnitt 9 als Teil des Werkzeuges 1 nach dem Oxidieren durch das thermo-chemische Verfahren. Ein Teil der Randbereiche der Scheibenringoberflächen wurden oxidiert 10, wodurch sich die Höhe h auf h1 und die Breite b auf b1 des metallischen Scheibenringes 7 reduziert haben. Die Lücken 8 zwischen den Scheibenringen 7 wurden in diesem Ausführungsbeispiel mit Zunder 11 durch Zunderbildung während des thermo-chemischen Verfahrens geschlossen.

Das erfindungsgemäße Verfahren beschränkt sich in seiner Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Warmumformwerkzeug
- 2: Grundkörper gemäß dem Stand der Technik
- 3: Arbeitsbereich
- 4: Oxidschicht nach Stand der Technik
- 5: Grundkörper
- 6: Mit Scheiben bestückter Werkzeugbereich
- 7: Scheiben oder Scheibenringe
- 8: Lücken zwischen den Scheiben oder Scheibenringen
- 9: Einzelschnitt
- 10: Oxidierter Randbereich der Scheiben oder Scheibenringen
- 11: Füllmaterial in den ursprünglichen Lücken
- a: Achsrichtung
- b: Breite der Scheiben oder Scheibenringen vor der thermo-chemischen Behandlung
- h: Höhe der Scheiben oder Scheibenringen vor der thermo-chemischen Behandlung
- b1: Breite des metallischen Anteils der Scheiben oder Scheibenringe nach der thermo-chemischen Behandlung
- h1: Höhe des metallischen Anteils der Scheiben oder Scheibenringe nach der thermo-chemischen Behandlung

## Patentansprüche

1. Verfahren zur Herstellung eines Warmumformwerkzeuges (1), welcher mindestens einen metallischen Grundkörper (5) umfasst, **dadurch gekennzeichnet, dass**
der Grundkörper (5) zumindest anteilig mit an dem Grundkörper (5) beabstandet angeordneten, metallischen Scheibenringen oder Scheiben (7) derart bestückt wird, dass beim Aufbringen der metallischen Scheibenringe oder Scheiben (7) Lücken (8) zwischen den Scheibenringen oder Scheiben (7) entstehen, wobei die Oberflächen der Scheibenringe oder Scheiben (7) mittels eines thermochemischen Verfahrens zur Oxidation gebracht werden und die Lücken durch die Bildung der metallischen Oxide bzw. des Zunders verengt oder vollständig verschlossen werden.

2. Verfahren nach Anspruch 1,
**dadurch gekennzeichnet, dass**
in die Lücken (8) Zusatzmaterialien eingebracht werden.

3. Verfahren nach Anspruch 1,
**dadurch gekennzeichnet, dass**
die Zusatzmaterialien keramische Partikel, Eisengusspartikel oder Drähte sind.

4. Verfahren nach einem der vorangegangenen Ansprüche,
**dadurch gekennzeichnet, dass**
in die verengten Lücken (8) Zusatzmaterialien eingebracht werden.

5. Verfahren nach einem der vorangegangenen Ansprüche,
**dadurch gekennzeichnet, dass**
das Verschließen der Lücken (8) oder der verengten Lücken (8) mittels thermischem Plasmaspritzen erfolgt.

6. Verfahren nach einem der vorangegangenen Ansprüche,
**dadurch gekennzeichnet, dass**
die einzelnen Scheibenringe oder Scheiben (7) zumindest teilweise unterschiedliche chemische Zusammensetzung aufweisen.

## Claims

1. Method for producing a hot forming tool (1) comprising at least one metallic base body (5),
**characterized in that**
the base body (5) is at least partially equipped with metallic disc rings or discs (7) arranged at a distance from the base body (5) in such a way that gaps (8) between the disc rings or discs (7) are created when the metallic disc rings or discs (7) are applied, wherein the surfaces of the disc rings or discs (7) are brought to the oxidation by means of a thermo-chemical process, and the gaps by the formation of the metallic oxides or of the scale will be narrowed or completely closed.

2. The method according to claim 1,
**characterized in that**
in the gaps (8) additional materials are introduced.

3. The method according to claim 1,
**characterized in that**
the additional materials are ceramic particles, cast iron particles or wires.

4. Method according to one of the preceding claims,
**characterized in that**
in the narrowed gaps () additional materials are introduced.

5. Method according to one of the preceding claims,
**characterized in that**
the closing of the gaps (8) or the narrowed gaps (8) takes place by means of thermal plasma spraying.

6. Method according to one of the preceding claims,
**characterized in that**
the individual disc rings or discs (7) have at least partially different chemical compositions.

## Revendications

1. Procédé de fabrication d'un outil de thermoformage (1) comprenant au moins un corps de base métallique (5),
**caractérisé par le fait que**
le corps de base (5) est pourvu au moins partiellement d'anneaux ou de disques métalliques (7) espacés sur le corps de base (5) de telle sorte que, lors de l'application des anneaux ou disques métalliques (7), des espaces (8) apparaissent entre les anneaux ou disques (7), les surfaces des anneaux ou disques (7) étant amenées à l'oxydation par un procédé thermo-chimique et que les espaces vides sont réduits ou complètement fermés par la formation des oxydes métalliques ou de la calamine.

2. Procédé selon la revendication 1,
**Caractérisé par le fait que**
des matériaux supplémentaires sont introduits dans les espaces vides (8).

3. Procédé selon la revendication 1,
**Caractérisé par le fait que**
les matériaux d'apport sont des particules de céramique, des particules de fonte ou des fils métalliques.

4. Procédé selon l'une des revendications précédentes,
**Caractérisé par le fait que**
des matériaux supplémentaires sont introduits dans les espaces () plus étroits.

5. Procédé selon l'une des revendications précédentes,
**Caractérisé par le fait que**
la fermeture des espaces (8) ou des espaces rétrécis (8) s'effectue par projection thermique au plasma.

6. Procédé selon l'une des revendications précédentes,
**Caractérisé par le fait que**
les anneaux ou disques individuels (7) présentent au moins partiellement des compositions chimiques différentes.
